# EUROPEAN PATENT SPECIFICATION

(11) **EP 0 998 435 B1**
(45) Date of publication and mention of the grant of the patent: **26.09.2012**
(21) Application number: 98918937.8
(22) Date of filing: 05.05.1998
(51) Int. Cl.: C05G 3/00, C05G 5/00, A01N 25/00

(54) **CONTROLLED RELEASE FERTILIZER COMPOSITIONS AND PROCESSES FOR THE PREPARATION THEREOF**
DÜNGEMITTELNZUSAMMENSETZUNGEN MIT KONTROLIERTER FREIGABE UND VERFAHREN ZUR IHRER HERSTELLUNG
COMPOSITIONS D'ENGRAIS A LIBERATION CONTROLEE ET PROCEDES DE PREPARATION DE CES COMPOSITIONS

(43) Date of publication of application: 10.05.2000
(73) Proprietor: Everris International B.V., 6422 PD Heerlen (NL)
(72) Inventor: TIJSMA, Edze, Jan, 6224 LD Maastricht (NL); TERLINGEN, Johannes, Gijsbertus, Antonius, 6373 VT Landgraaf (NL); AALTO, Seija, Helena, Stone ST15 8TU (GB); VAN KAATHOVEN, Hendrikus, Gijsbertus, Adrianus, 6118 CS Nieuwstadt (NL)
(74) Representative: Vernout, Robert
(86) International application number: PCT/US1998/008991
(87) International publication number: WO 1999/057082

(56) References cited:
- EP-A- 0 356 755
- WO-A-92/17423
- JP-A- 2 111 686
- US-A- 3 223 518
- US-A- 3 259 482
- US-A- 3 400 011
- US-A- 4 549 897
- US-A- 4 657 576
- US-A- 5 089 041
- US-A- 5 186 732
- US-A- 5 399 186
- US-A- 5 413 856
- US-A- 5 429 654
- US-A- 5 652 196
- DATABASE WPI Week 199834 Thomson Scientific, London, GB; AN 1998-393327 XP002543612 & JP 10 158084 A (CHISSO CORP) 16 June 1998 (1998-06-16) & DATABASE EPODOC EUROPEAN PATENT OFFICE, THE HAGUE, NL; 16 June 1998 (1998-06-16), UCHINO MASAZUMI, ASIHARA MICHIYUKI: "accurately controlled delayed-release type coated granular fertilizer, mixed fertilizer using the same as effective component and cultivation method using the same mixed fertilizer"

## Description

### BACKGROUND OF THE INVENTION

### FIELD OF THE INVENTION

The present invention relates to a process for preparing controlled release fertilizers in accordance with the preamble of claim 1. Such a process is disclosed in US 5,652,196.

### DESCRIPTION OF RELATED ART

Coated (or encapsulated) fertilizers are known to be very effective sources to provide a controlled release of nutrients for the feeding of plants. The nutrients are released at controlled rates through the fertiliser's coating resulting in a sustained feeding of plants. As a result, one application of these so-called controlled release fertilizers (CRFs) can provide the necessary nutrients for a plant that would take multiple applications of soluble fertilizers. One type of coated fertiliser in wide use is sulfur coated fertiliser, such as disclosed in US 4,042,366, US 4,636,242 and WO 94/29239. The release of nutrients from sulfur-coated fertilizers occurs by diffusion through imperfections in the sulfur coating and through coating breakdown. The major advantage of the sulfur coated fertilizers is their relatively low cost.

A second type of CRFs utilizes solvent applied polymer coatings. The polymeric materials applied are either thermosetting resins or thermoplastics. Examples of solvent applied thermosetting resin coated fertilizers which are currently in use are disclosed in US 3,223,528, GB 2,202,523 and EP 0,184,869, whereas examples based on thermoplastics can be found in US 4,019,890. Another type of encapsulated fertilizers that exhibits good controlled release properties is latex coated granular fertilizers such as those disclosed in US 4,549,897 and US 5,186,732. Both solvent and latex applied polymer coated fertilizers offer important benefits over sulfur-coated products concerning consistency of release rates. The majority of nutrient release is by diffusion through pores in the polymer coating, rather than release through coating imperfections.

The presence of a polymeric coating on CRFs allows for a rather uniform and consistent nutrient release, provided that the barrier properties of the polymer are sufficient. However, in general these CRFs show a high release rate of nutrients during the first period after application, which is followed by decreasing nutrient release rate during the next period. Finally, the fertiliser granules become exhausted resulting in a further decrease in release rate. In general, the accumulated nutrient release curves can be characterised mathematically by smooth quadratic (convex) curves.

Regarding CRFs which are characterised by a delayed start of the release of nutrients after application, one type is known. Multi-layered polyolefin-coated (POC) CRFs, see e.g. JP 09,241,090, have been claimed to exhibit delayed release determined by the incorporation of chemicals in the coating. The major disadvantage of these type of delayed release POC CRFs is the fact that at least two coatings are required, i.e. one to give the specific release pattern and one to provide the delay. Furthermore, the presence of specific chemicals in the delayed start coating is required.

### SUMMARY OF THE INVENTION

It is a primary object of the present invention to provide controlled release products, which release nutrients only after a specific period after application. These products will be described as delayed start products/intermediates.

Another object of this invention is to provide processes for obtaining these products.

It is a more specific object of this invention to provide coated granular products, which, alone or as a component in a fertilizer product, exhibit a release pattern that is capable of supplying nutrients to plants when it is needed and a release that is not affected by soil conditions except temperature.

The foregoing and other objects of the invention are achieved by providing a process in accordance with claim 1.

The products of the present invention are characterised by the presence of only one layer of coating material, without the presence of specific additives. The fertilizer compositions have a delayed start release pattern, with a very low release of less than 10% occurring during a period of 30 days after exposure of the fertilizer composition to moisture. Preferably, the coating is present on at least 95% of all the granules, whereby the cumulative release of fertilizer compound(s) 30 days after exposure to moisture is less than 5%.

These delayed start type of fertilizer products will be useful as fertilizers for specific plants or as a building block in fertilizers to obtain products displaying specific release patterns. Furthermore, in accordance with the present invention, a more efficient use of fertiliser products can be attained, for example, by applying CRFs via the 'dibbling' technique.

Preferably, at least 95% of all the granules are coated with the film, whereby the cumulative release of fertiliser compound(s) 30 days after exposure to moisture is less than 5%.

### BRIEF DESCRIPTION OF THE DRAWINGS

Fig. 1 shows a comparison of the initial release pattern of standard coated 17-10-13+traces and of 17-10-13+traces coated according to Example 1.
Fig. 2 shows a comparison of the initial release pattern of standard coated 17-10-13+traces and of 16-10-20 coated according to Example 2.

### DETAILED DESCRIPTION OF THE PREFERRED EMBODIMENT (S)

The granular core material may contain any type of water soluble fertilizer compound(s). Known chemical fertilizers including potassium nitrate, potassium sulphate, urea, ammonium nitrate, monopotassium phosphate, ammonium phosphate, or fertilizers obtained from compounding a mixture of these fertilizers can be used. In a preferred embodiment the fertilizers contain micronutrients.

The coating material applied can be based on any kind of material, thermoplastic or thermoset, which is able to form a uniform continuous polymer film.

In the present invention the thermoplastic coated material may comprise acrylic polymers.

In the present invention the thermosetting coated material may comprise polyesters such as a modified alkyd.

Optionally the coating may comprise non-specific additives (inert fillers), such as talc. The coating material may be applied from solution or from dispersion. When applied from a solution it is preferred that a solvent is used in which the resin dissolves at all temperatures, thus making it possible to use resin solutions having a relatively high solids content (more than 40% by weight).

The coating may be applied to the fertilizer by a number of methods. However, in a most preferred embodiment of this invention the coating process is performed in either a coating drum or a fluidized bed, such as a Würster column. The thickness of the coating applied on the fertiliser granules is preferably between 5 and 110µm, more preferably between 25 and 90 µm. Typically, these values correspond to an amount of coating material applied of 1 to 20 pph by weight and 4 to 15 pph by weight, respectively.

The coating level of at least 90% which is required by the present invention may be obtained by employing a specific coating procedure and/or by using specific core material.

In a preferred embodiment of the present process the granular core material has a regular shape, more preferably a substantially round or spherical shape, which enables the formation of the uniform, substantially continuous polymer film coating. Preferably, at least 95% of the core granules have a substantially round shape. Substantially round, granular core material may be obtained by processing a granular starting material in a spiral separator.

The test employed herein for purposes of determining the roundness or sphericity of the granular core material is based on a particle shape classifier developed by Carpenter and Deitz (Research Paper 2238, 3. of Res. Of the NBS 41(37), September 1951) which was modified for separating spherical and nonspherical granules as follows:
A device consisting of a turntable 20" in diameter was mounted at an angle of 9° with the horizontal. The turntable was rotated at 4 rpm. Granules were fed from a small belt feeder at 11.5 grams/min. onto the edge of the rotating turntable approximately 1" from the center on the counter clockwise side. This low feed rate allowed individual granules to roll on the turntable with a minimum of interference between each other. Spherical granules rolled straight and fell off the bottom of the turntable into a recovery pan. Most nonspherical granules rolled in short irregular paths and tended to stop on the turntable and they were carried around and blown off the turntable into another recovery pan by a stream of air directed parallel to the surface of the turntable.
For this testing, the granules were fed from the feeder into a glass funnel with a 7mm opening and short stem bent at an angle of approximately 100°. The tip of the funnel was no more than 1/4" from the edge of the turntable and as close as possible to the turntable without touching. One hundred gram samples were used, and the turntable was cleaned after each sample with glass cleaner to reduce friction. The nonspherical granules were weighed and, thus, the percent of spherical granules was determined.

When processing a granular starting material in a spiral separator, a product having at least 98% round particles or even consisting essentially completely of round particles can be obtained.

In the process of the present invention, the coating material is applied from a solution or dispersion of the polymer, and the rate of application of the polymer material is increased during the coating step. The rate of application of the polymer material may be increased in various manners.

In one method the polymer content of the solution or dispersion is increased during the coating step. For example, when using an alkyd resin solution the resin content of the solution is increased from 45-55% by weight at the beginning of the coating step to 60-70% by weight at the end of the coating step. In a preferred embodiment the resin content is increased linearly.

In a second method the rate of addition of the solution or dispersion is increased during the coating step.

The following examples illustrate the practice of the invention. All parts are by weight unless otherwise indicated.

### Example 1

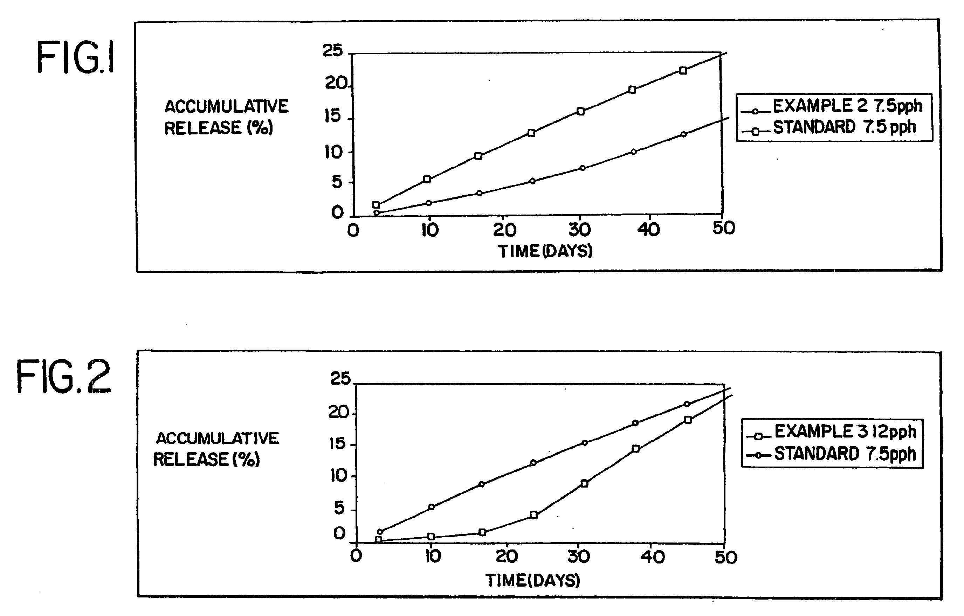

A granular NPK fertilizer (17-10-13+traces) was coated with an alkyd resin in a coating drum. In a drum coater 10 kg of this product was placed and heated. After reaching a temperature of 80°C, a solution of a modified unsaturated oil copolymer-based alkyd resin in white spirit was pumped onto the fertiliser. At the beginning of the coating process a more diluted, thus a solution containing less solids, was used than at the end of the coating process. In total 0.81 kg of solids was added to the fertiliser during the coating process, yielding a coating level of 7.5 pph (parts per hundred on weight basis). After coating the fertiliser was cooled down to room temperature.
The release of nutrients the release of the coated (17-10-13+traces) fertiliser was tested by placing 20 g of this product in 400 ml water of 21°C in a closed plastic bottle. At certain time intervals the water was replaced and the conductivity of the solution was measured. The measured conductivity can be translated into a total amount of nutrients released using appropriate calibration constants. These calibration constants are specific for a certain type of fertiliser and need to be determined experimentally. However the release can also be measured by measuring the amount of nutrients released by using standard chemical analysis methods is presented in Figure 2. After a certain delay time, the product starts releasing its contents. For comparison a product coated via a standard procedure with the same coating level (7.5 pph) is given. The standard coating procedure is comparable to that given above, except that a standard solids concentration is used during the coating process. The solids concentration is not varied during the coating procedure. It is clear from Figure 2 that the standard product starts releasing immediately.

### Example 2

A granular NPK fertilizer (16-10-20) was coated with an acrylic dispersion, useful to obtain a coating with a very low water vapour transmission rate, in a fluidized bed. Granular 16-10-20, 9 kg, was added into a pilot-scale fluidized bed Würster-type column and pre-heated during 14 minutes at 70°C. An acrylic dispersion, 3200 g, 1250 g on a dry solids basis, was applied to the fluidized NPK granules by spraying from the bottom of the bed at a starting rate of 42 g/min. The rate of addition was gradually increased to 63 g/min (at 37 min) and subsequently to 84 g/min (at 58 min). The drying air flow rate was 8 L/min and entered the bed at a temperature of 70°C. The total coating time was 58 min, which was followed by an additional 15 minutes of drying at an air inlet temperature of 70°C and a 5 minutes cooling phase using ambient air resulting in a product having a coating level of 12 pph. The release pattern of the resulting product (see Figure 3) was determined as described in Example 1.

## Claims

1. A process for preparing a controlled release fertilizer composition comprising:
a) providing a granular core material comprising at least one water soluble fertiliser compound, and
b) coating the core material with a substantially water-insoluble coating applied from a solution or dispersion of a polymer material such that the core material is coated with a single layer of a coating material which forms a uniform, substantially continuous polymer film on the core material with at least 90% of all the granular core material being coated with the film;
**characterised in that**
said polymer material is a modified unsaturated oil copolymer-based alkyd resin or an acrylic polymer;
the rate of application of the polymer is increased during said coating step;
and **in that** the controlled release fertilizer exhibits delayed release of the fertiliser compound by releasing less than 10% of the total weight of the fertilizer compound in /Z the granular core within 30 days after exposure of the fertilizer composition to moisture.

2. A process according to claim 1, **characterised in that** the polymer content of the solution or dispersion is increased during the coating step.

3. A process according to any one of claims 1-2, **characterised in that** the core material is coated with an alkyd resin solution and the resin content of the solution is increased from 45-55% by weight at the beginning of the coating step to 60-70% by weight at the end of the coating step.

4. A process according to any one of claims 1-3, **characterised in that** the resin content is increased linearly.

5. A process according to any one of claims 1-4, **characterized in that** said granular core material comprises granules with at least 95% of the granules being substantially spherical as determined by a particle shape classifier with a 20" diameter turntable mounted at a 9° angle and rotated at 4 revolutions per minute.

6. A process according to any one of claims 1-5" **characterised in that** the coating has a thickness of 5 to 110 µm.

7. A process according to any one of claims 1-6, **characterised in that** the substantially spherical, granular core material is obtained by processing granular material in a spiral separator.

8. A process according to any one of claims 1-7, **characterised in that** at least 98% of the granules are substantially spherical.

## Patentansprüche

1. Verfahren zur Herstellung einer Düngemittelzusammensetzung mit kontrollierter Freisetzung, umfassend:
a) Bereitstellen eines körnigen Kernmaterial, das wenigstens eine wasserlösliche Düngemittelverbindung umfasst, und
b) Beschichten des Kernmaterial mit einer im Wesentlichen wasserunlöslichen Beschichtung, aufgebracht aus einer Lösung oder Dispersion eines Polymermaterials, so dass das Kernmaterial mit einer einzelnen Schicht eines Beschichtungsmaterials überzogen wird, die einen gleichförmigen, im Wesentlichen kontinuierlichen Polymerfilm auf dem Kernmaterial bildet, wobei wenigstens 90% des gesamten körnigen Kernmaterial mit dem Film überzogen werden;
**dadurch gekennzeichnet, dass**
das Polymermaterial ein modifiziertes, auf ungesättigtem Öl-Copolymer basiertes Alkydharz oder ein Acrylpolymer ist;
die Aufbringrate des Polymers während des Beschichtungsschritts erhöht wird;
und dass das Düngemittel mit kontrollierter Freisetzung verzögerte Freisetzung der Düngemittelverbindung zeigt, indem weniger als 10% des Gesamtgewichts der Düngemittelverbindung im körnigen Kern innerhalb von 30 Tagen nach Aussetzen der Düngemittelzusammensetzung gegenüber Feuchtigkeit freigesetzt werden.

2. Verfahren nach Anspruch 1, **dadurch gekennzeichnet, dass** der Polymergehalt der Lösung oder Dispersion während des Beschichtungsschritts erhöht wird.

3. Verfahren nach einem der Ansprüche 1-2, **dadurch gekennzeichnet, dass** das Kernmaterial mit einer Alkydharzlösung beschichtet wird und der Harzgehalt der Lösung von 45-55 Gew.-% zu Beginn des Beschichtungsschritts auf 60-70 Gew.-% am Ende des Beschichtungsschritts erhöht wird.

4. Verfahren nach einem der Ansprüche 1-3, **dadurch gekennzeichnet, dass** der Harzgehalt linear erhöht wird.

5. Verfahren nach einem der Ansprüche 1-4, **dadurch gekennzeichnet, dass** das körnige Kernmaterial Körner umfasst, wobei wenigstens 95% der Körner im Wesentlichen kugelförmig sind, wie bestimmt mit einem Teilchenformklassierer mit einem Drehtisch mit einem Durchmesser von 20", angebracht in einem Winkel von 9° und gedreht mit 4 Umdrehungen pro Minute.

6. Verfahren nach einem der Ansprüche 1-5, **dadurch gekennzeichnet, dass** die Beschichtung eine Dicke von 5 bis 110 µm besitzt.

7. Verfahren nach einem der Ansprüche 1-6, **dadurch gekennzeichnet, dass** das im Wesentlichen kugelförmige, körnige Kernmaterial erhalten wird, indem körniges Material in einem Wendelscheider verarbeitet wird.

8. Verfahren nach einem der Ansprüche 1-7, **dadurch gekennzeichnet, dass** wenigstens 98% der Körner im Wesentlichen kugelförmig sind.

## Revendications

1. Procédé pour préparer une composition d'engrais à libération contrôlée comprenant :
a) la fourniture d'un matériau de noyau granulaire comportant au moins un composé d'engrais hydrosoluble, et
b) le revêtement du matériau de noyau avec un revêtement sensiblement insoluble dans l'eau appliqué à partir d'une solution ou d'une dispersion d'un matériau polymère de sorte que le matériau de noyau est revêtu d'une seule couche d'un matériau de revêtement qui forme un film polymère uniforme sensiblement continu sur le matériau de noyau, au moins 90% de tout le matériau de noyau granulaire étant revêtu du film ;
**caractérisé en ce que** ledit matériau polymère est une résine alkyde à base de copolymère d'huile insaturée modifiée ou un polymère acrylique ;
la vitesse d'application du polymère est accrue pendant ladite étape de revêtement ;
et **en ce que** l'engrais à libération commandée présente une libération retardée du composé d'engrais en libérant moins de 10% du poids total du composé d'engrais dans le noyau granulaire dans les 30 jours après exposition de la composition d'engrais à l'humidité.

2. Procédé selon la revendication 1, **caractérisé en ce que** la teneur en polymère de la solution ou de la dispersion est accrue pendant l'étape de revêtement.

3. Procédé selon l'une quelconque des revendications 1-2, **caractérisé en ce que** le matériau de noyau est revêtu d'une solution de résine alkyde et la teneur en résine de la solution est accrue de 45-55% en poids au début de l'étape de revêtement à 60-70% en poids à la fin de l'étape de revêtement.

4. Procédé selon l'une quelconque des revendications 1-3, **caractérisé en ce que** la teneur en résine est accrue linéairement.

5. Procédé selon l'une quelconque des revendications 1-4, **caractérisé en ce que** ledit matériau de noyau granulaire comporte des granules, au moins 95% des granules étant sensiblement sphériques comme déterminé par un dispositif de classification granulométrique doté d'une platine de 20" de diamètre montée à un angle de 9° et mise en rotation à 4 tours par minute.

6. Procédé selon l'une quelconque des revendications 1-5, **caractérisé en ce que** le revêtement a une épaisseur de 5 à 110 µm.

7. Procédé selon l'une quelconque des revendications 1-6, **caractérisé en ce que** le matériau de noyau sensiblement sphérique et granulaire est obtenu en traitant le matériau granulaire dans un trieur à vis sans fin.

8. Procédé selon l'une quelconque des revendications 1-7, **caractérisé en ce que** au moins 98% des granules sont sensiblement sphériques.
